Europäisches Patentamt

European Patent Office

Office européen des brevets

(11) Publication number: 0 402 064
A2

# EUROPEAN PATENT APPLICATION

(21) Application number: 90306011.9

(51) Int. Cl.5: G06F 15/20

(22) Date of filing: 01.06.90

(30) Priority: 03.06.89 JP 141437/89

(43) Date of publication of application:
12.12.90 Bulletin 90/50

(84) Designated Contracting States:
DE FR GB

(71) Applicant: BROTHER KOGYO KABUSHIKI
KAISHA
35, 9-chome, Horita-dori Mizuho-ku
Nagoya-shi, Aichi-ken(JP)

(72) Inventor: Sakai, Toshiyuki, Brother Kyogo K.K.
35, Horita-dori 9-chome, Mizuho-ku
Nagoya-shi, Aichi-ken(JP)

(74) Representative: Senior, Alan Murray et al
J.A. KEMP & CO 14 South Square Gray's Inn
London WC1R 5EU(GB)

(54) Text processing device.

(57) In a text processing device having a keyboard for inputting text, text memory for storing the text, a CRT display for displaying the text, the numbers of respective words in the text is counted and displayed on the CRT display as a list. When one of the word of the list displayed on the CRT display is designated, the portion of the text including the designated word is displayed on the CRT display.

FIG. 1

EP 0 402 064 A2

## Text Processing Device

The present invention relates to a text processing device, and more particularly, to a text processing device capable of counting the numbers of respective the words appeared in a text.

When a writer is creating a text in foreign language with a typewriter or a word processor, because of insufficient linguistic knowledges or vocabularies, the writer tends to use the same word frequently, that is, the same verb, adjective, adverb, conjunction, and so forth, and thereby the text being created becomes dull. To prevent this, it is useful to know how many times each word appears in a single text.

The text processing device capable of counting the number of respective words has been known. The present applicant disclosed in Japanese Patent Provisional Publication No. SHO 63-131264 a text processing device for indicating when the number of the uses of a word in a text exceeds a predetermined value (for example, three times).

In the above text processing device, when the of the respective words in the text exceeds the predetermined value, an alarm occurs. Thus, the number of respective words can be checked and thereby words to be inputted can be changed to corresponding synonyms. However, when a word has been inputted and an alarm occurs, the operator may replace the word precedingly inputted. In this case, in order to replace the word with a synonym, the text data including the same word precedingly used should be displayed by operating a cursor movement key or scroll key, or alternatively, after moving the cursor to the start position of the text data, then the word is searched by a well-known search function. Thus, the edit operation for preventing same words from being frequently used becomes complicated and thereby efficiency of the operation is decreased.

It is therefore an object of the invention to provide a text processing device capable of counting the incidence of respective words in a text stored in a text memory or being created and simplifying the edit operation for preventing the frequent use of the same words in the text.

According to a first aspect of the invention, there is provided a text processing device comprising input means for inputting text, text storing means for storing therein the text having been inputted through said input means, and display means for displaying said text, said device further comprising:

counting means for counting the incidence respective words in the text stored in said text storing means;

first control means for displaying the respective words and the numbers thereof counted by said counting means;

designate means for designating one of said words displayed by said display means;

detection means for detecting the portions of the text including said designated word; and

second control means for displaying said portions of the text on said display means.

According to another aspect of the invention, there is provided a text processing device comprising input means for inputting text, text storing means for storing the text inputted through said input means, and display means for displaying said text, said word processing device further comprising:

counting means for counting the incidence of respective words inputted through said input means;

first control means for displaying the respective words and the numbers thereof counted by said counting means;

designate means for designating one of said words displayed by said display means;

detection means for detecting the portions of the text including said designated word, said text being inputted through said input means and stored in said text storing means; and

second control means for displaying said portions of the text on said display means.

The invention will be better understood from the following description given by way of example with reference to the accompanying drawings in which:

Fig. 1 is a perspective view of a word processor embodying the present invention;

Fig. 2 is a block diagram of a control system of the word processor;

Figs. 3A through 3C are flow charts illustrating routines for displaying the respective words in a text and the numbers thereof;

Figs. 4A through 4C are diagrams showing the structure of a counting data memory and the counting procedure;

Figs. 5A and 5B are diagrams showing a table of counting data being displayed;

Fig. 6 shows a displayed portion of the text data including a designated word; and

Figs. 7A and 7B are flow charts of routines for counting the respective words and the numbers thereof inputted through a keyboard according to a modification of the embodiment.

Description of the Embodiment

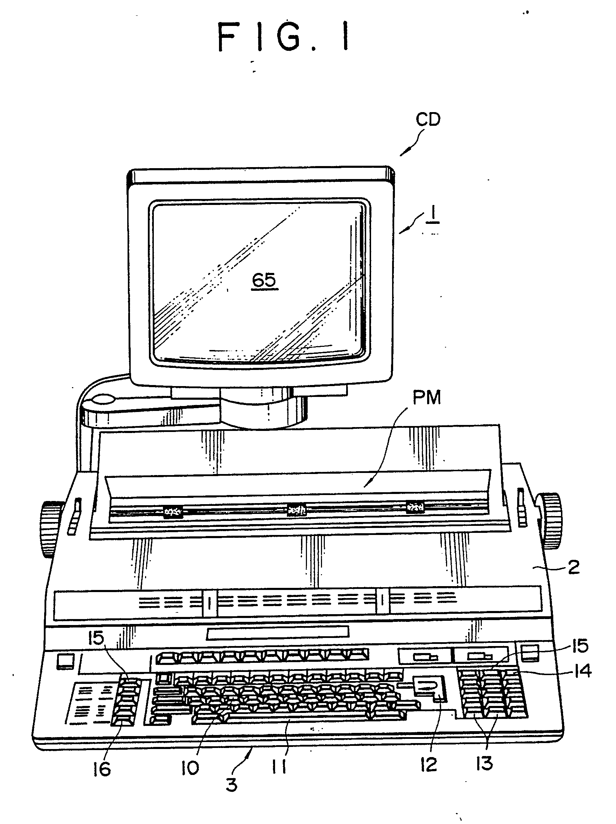

Fig. 1 shows a word processor embodying the present invention, which equipped with a CRT (Cathode Ray Tube) display screen 65.

As shown in Fig. 1, a keyboard 3 is disposed in front of a main unit frame 2 of a word processor 1. A print mechanism PM is disposed in the main unit frame 2 behind the keyboard 3. A CRT display unit CD is disposed at an upper rear portion of the main unit frame 2.

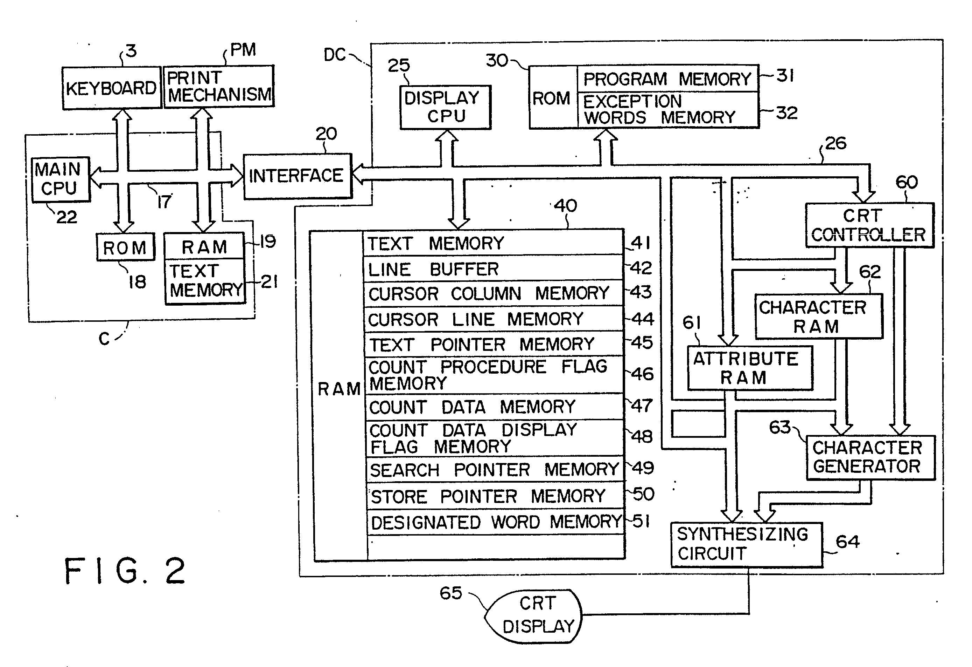

The keyboard 3 is provided with character keys 10 including alphanumeric keys, and symbol keys, a space key 11, a return key 12, cursor movement keys 13 for moving the cursor on the CRT display 65 vertically and horizontally, a word count key 14 for starting a word count operation of counting the number of respective one of the words appeared in a text stored in text memories 21 and 41 (refer to Fig. 2), a cancel key 15 for canceling the display of the count data which will be described later and for displaying the edit screen on the CRT display screen 65, and various function keys for editing text data.

The printing mechanism PM has a well-known construction, that is, the printing mechanism PM is provided with a mechanism including a carriage, its drive motor, a mechanism for feeding a printing sheet, its drive motor, a daisy wheel, its drive motor, a printing hammer, its drive solenoid, and so forth.

Fig. 2 is a block diagram of a control system of the word processor. A control unit C is provided with a main CPU (Central Processing Unit) 22, a ROM 18 electrically connected to the main CPU 22 through a bus 17 such as a data bus, an RAM 19, an I/O interface (not shown), and a drive circuit for driving the motors and solenoids of the printing mechanism PM. The keyboard 3 and the printing mechanism PM are electrically connected to the control unit C.

The RAM 19 is provided with a plurality of text memories 21 for storing data of a plurality of texts and various memories for temporarily storing the results computed in the main CPU 22.

The ROM 18 has stored therein a control program for controlling the print mechanism PM, a management program for managing various memories of the RAM 19, programs for discriminating whether input code data is character data or command data and for analyzing command data, and so forth.

The main CPU 22 outputs code data from the keyboard 3 to the display control unit DC of the display unit CD through an interface 20 according to the aforesaid various programs in the ROM 18. When the main CPU 22 receives a print command, it reads the specified text data from the text memory 21 of the RAM 19 and outputs it to the print mechanism PM. In addition, the main CPU 22 causes the created text data to be stored in the text memory 21 of the RAM 19 or transmits the text data to the display control unit DC through the interface 20.

The display unit CD is provided with the display control unit DC and the CRT display 65. The display control unit DC is provided with a display CPU 25, a ROM 30 electrically connected to the display CPU 25 through a bus 26 such as a data bus, a RAM 40, a character RAM 62, an attribute RAM 61, a character generator 63, a synthesizing circuit 64 and a CRT controller 60.

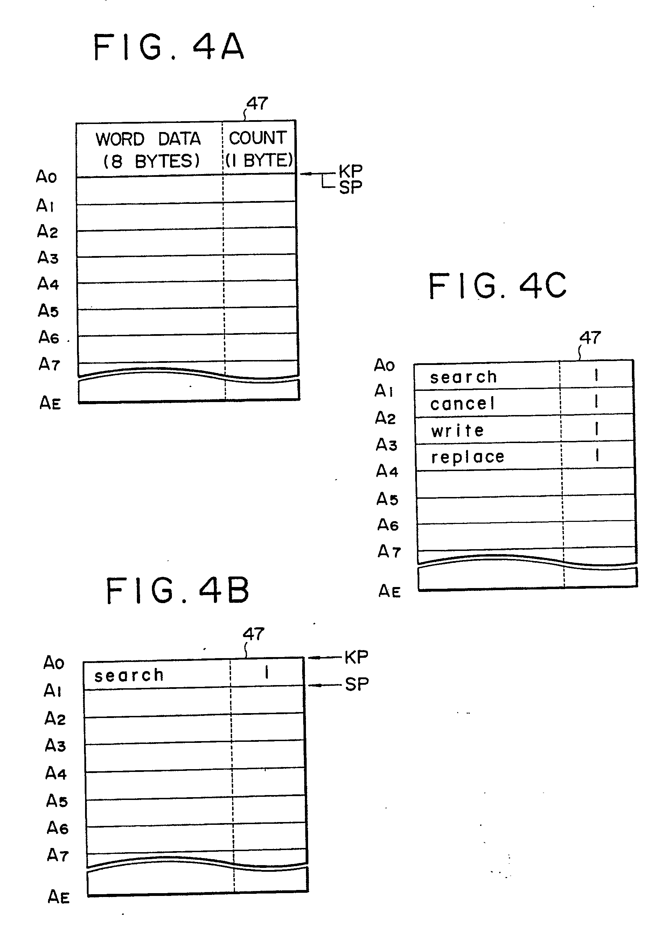

The RAM 40 is provided with a text memory 41 for storing text data being created or that being read from the text memory 21 of the RAM 19, a line buffer 42 for storing line data of one line, on which a cursor 55 is located, of a plurality of lines displayed on the CRT display screen 65, a cursor column memory 43 for storing column data of the cursor 55 corresponding to the cursor display position in the line buffer 42, a cursor line memory 44 for storing the line number of the line buffer 42 in the text memory 41, a text pointer memory 45 for storing one address of the text memory 41 (a text pointer TP is stored therein), a count procedure flag memory 46 for storing a count procedure flag CPF which is set when the number of respective words inputted to text data is counted, a count data memory 47 for storing the respective words with the numbers thereof as count data, a count data display flag memory 48 for storing a count data display flag KDF which is set when the count data of the count data memory 47 is displayed on the CRT display screen 65, a search pointer memory 49 for storing one address of the count data memory 47 (a search pointer KP is stored therein), a store pointer memory 50 for storing the address of the count data memory 47 (a store pointer SP is stored therein) from where the word is to be stored in the count data memory 47, a designated word memory 51 for storing the word data designated by a block cursor 57 (when a block cursor 57 is displayed on a word, the word displayed in reverse video and highlighted) while the count data is displayed, and various memories for temporarily storing the computation results of the display CPU 25. In the count data memory 47, for example, as shown in Fig. 4A, pairs of the respective words (8 byte) and the numbers thereof (1 bytes) are stored as count data. The count data memory 47 has the storage capacity for 1000 records of count data, for example.

A program memory 31 of the ROM 30 is provided with a cursor movement control program for controlling data to be stored in the line buffer 42 according to the character data inputted, and for controlling the movement of the cursor in response to the cursor movement keys 13 of the keyboard 3, a control program for controlling a CRT controller 60, a control program for inputting procedure of the data transmitted from the main CPU 22, and for controlling editing procedure of the text data in the text memory 41, a control program for controlling the display of the count data, i.e., the respective words and the numbers thereof, and so forth.

An exception words memory 32 of the ROM 30 stores a plurality of exception words data which need not be counted such as articles, conjunctions, "Be" verbs, and so forth.

The character RAM 62 stores character and symbol code data for one page displayed on the CRT display screen 65 corresponding to column position on the CRT display screen 65. The attribute RAM 61 stores various formatting data corresponding to the address of the character stored in the character RAM 62 when the codes stored in the character RAM 62 are formatted characters such as underlines and bold-face characters. The character generator 63 stores approximately 400 types of display data for displaying characters and symbols on the CRT display screen 65 according to the code data. Each display data stored in the character generator 63 is composed of a dot pattern consisting of 16 bytes.

The synthesizing circuit 64 synthesizes the character and symbol data outputted from the character generator 63 with the formatting data outputted from the attribute RAM 61.

The display CPU 25 controls to display the text data which is read from the text memory 41 on the screen of the display screen 65 based on the command data. The display CPU 25 also stores code data outputted from the main CPU 22 through the interface 20 into the position corresponding to the cursor-displayed position of the line buffer 42 of the RAM 40. Moreover, the display CPU 25 transmits the code data to the character RAM 62 and to the attribute RAM 61 at the address corresponding to the address where the code data has been stored in the line buffer 42. In other words, the display CPU 25 executes the so-called input and edit procedure. In addition, the display CPU 25 controls the movement of the cursor 55 for instructing the address where the cursor 55 to be moved to the CRT controller 60.

The CRT controller 60 controls the CRT display 65 to display the data in synchronization with a raster signal. The CRT controller 60 controls to synthesize the display data outputted from the character generator 63 corresponding to the code data stored in the character RAM 62 with the formatting data outputted from the attribute RAM 61 in the synthesizing circuit 64, to transmit the synthesized data to the CRT display 65, and to display only one word of the count data in reverse video, i.e., the block cursor 57 is displayed, on the CRT display screen 65 in response to the operation of the cursor movement keys 13.

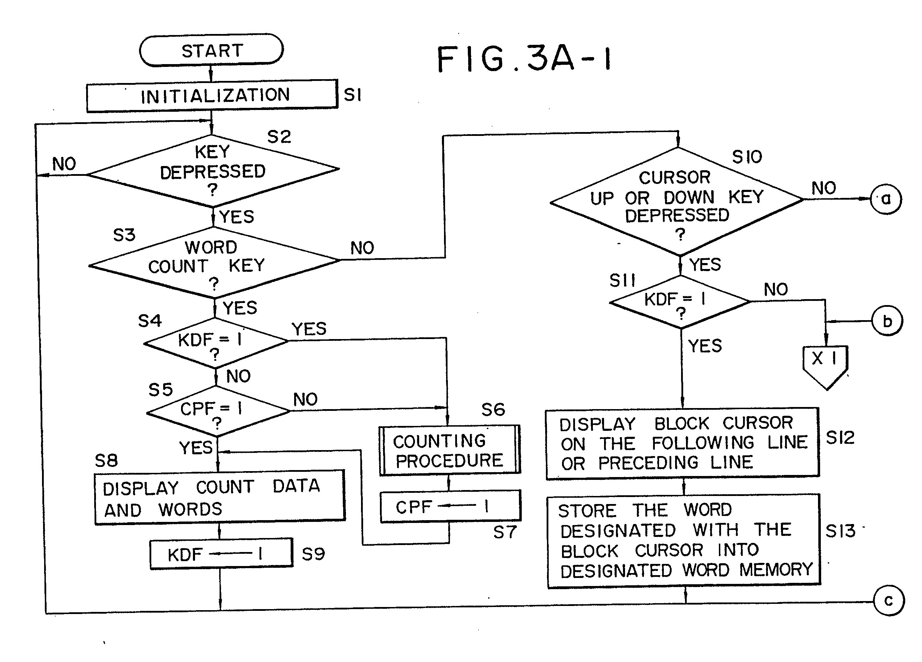

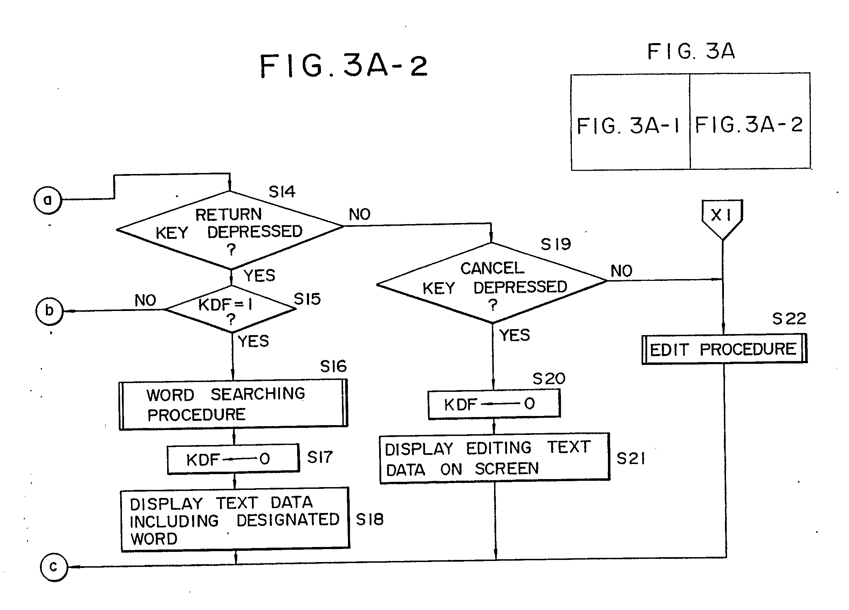

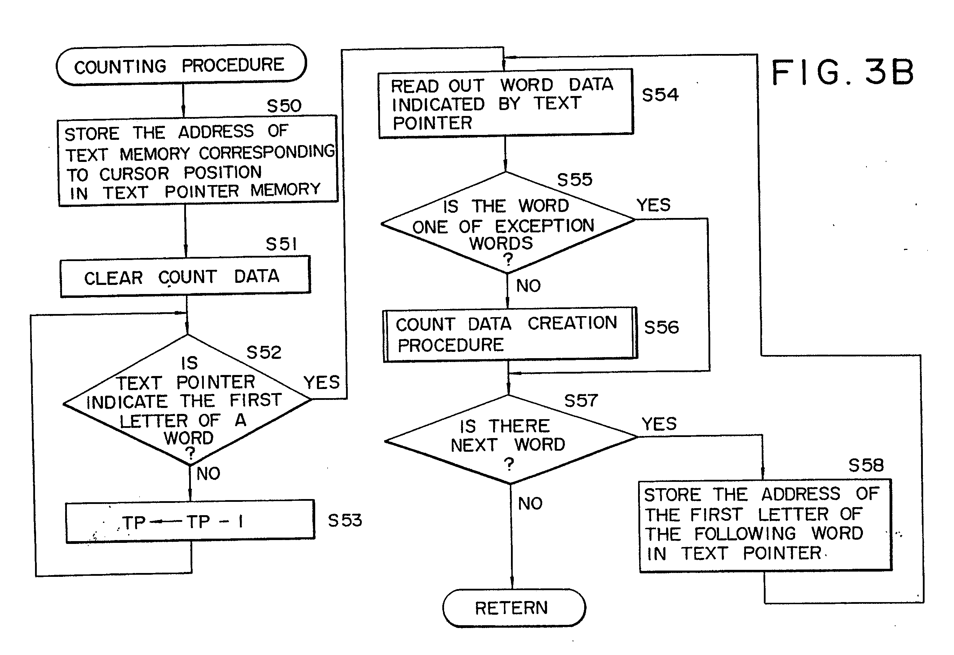

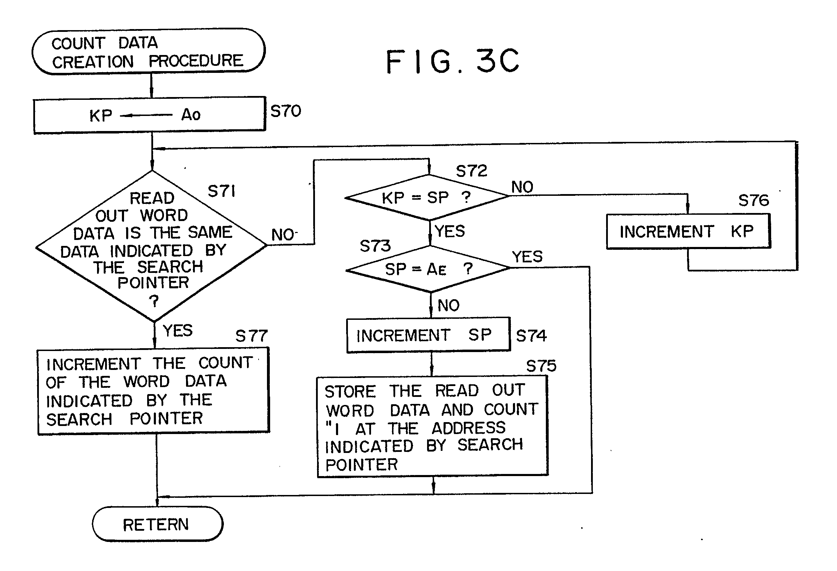

By referring to flowcharts of Figs. 3A, 3B, and 3C, the routine for controlling the display of the counting data executed in the display control unit DC will be explained.

This control starts when text data is newly created or when text data which has been created is read out of the text memory 21 of the RAM 19. The control for creating new text data will be described in the following.

When this control starts, the initialization is executed in step S1. When the character keys 10 or the function keys are operated, it is determined that a key is depressed and the condition becomes Yes in step S2. The characters and the like being inputted are displayed on the CRT display screen 65 after it is determined NO in each of steps S3, S10, S14, and S19. Then the edit procedure for sequentially storing the data as the text data in the text memory 41 through the line buffer 42 is executed in step S22 and the procedure is returned back to step S2.

When the word count key 14 is depressed, it is determined to be YES in step S3, and it is examined whether or not the count data display flag KDF is being set, namely, whether or not the count data is displayed on the CRT display screen 65 in step S4. When the count data is not displayed, it is further examined, in step S5, whether or not the count procedure flag CPF is set based on the data stored in the count procedure flag memory 46, namely, whether or not the counting procedure has been executed. When the counting procedure has not been executed, the procedure is returned back to step S6 and the counting procedure for counting the numbers of respective words appeared in the text is executed (see Fig. 3B).

When this procedure starts, the address of the cursor-displayed position of the text memory 41 is stored in the text pointer memory 45 based on the data stored in the cursor column memory 43 and the cursor line memory 44 in step S50, and the contents, i.e., the count data, stored in the count data memory 47 are cleared in step S51.

In steps S52 and S53, the address of the first character of the word designated by the cursor 55 is stored in the text pointer memory 45. First, in step S52, it is examined whether or not the text pointer TP is the address of the first character of a word, that is, it is examined whether or not the data, the address of which is preceding to the text pointer TP, is punctuation data such as return, space, period, comma, colon, semicolon, and so forth. When the data is not punctuation data, the text pointer TP is decremented by 1 byte in step S53. Then, the procedure in steps S52 and S53 is repeated. In step S52, when the determined conditions becomes YES, a data string from the data addressed by the text pointer TP to the data on the address just preceding to the address of the next punctuation, namely, the data of the whole word indicated by the text pointer TP is read (in step S54). The word data is examined whether or not to be one of exception words stored in the exception word memory 32 (in step S55). When the data is one of the exception words, the procedure is advanced to step S57. When it is not an exception word, the procedure is advanced to step S56 and the count data creation procedure (refer to Fig. 3C) is executed.

When this procedure starts, the start address A0 of the count data memory 47 is transmitted to the search pointer memory 49 as the search pointer KP (in step S70). It is examined whether or not the word data being read is the same word as that has been stored in the counting data memory 47 and indicated by the search pointer KP in step S71. When they are determined not to be equal, it is further examined whether the text pointer TP is equal to the store pointer SP in step S72. When it is determined to be YES in step S72, it is examined whether the store pointer SP is equal to the end address $A_E$ of the count data memory 47 in S73. When they are not equal, the store pointer SP is incremented by 9 bytes in step S74. Then, the word data being read and the initial count "1" are stored in the count data memory 47 at the address indicated by the search pointer KP in step S75. Then, the procedure is advanced to step S57. In step S71, when the number of characters of the word data being read are more than eight characters, it is examined whether or not the first eight characters of each of the word data are equal.

It should be noted that, although eight bytes are used as the word data storage area in this embodiment, when the storage capacity is set more than eight bytes, words consisting of nine or more characters can be precisely stored and compared. In this case, both the pointers KP and 5P are incremented by the number of bytes of storage area + 1 byte.

As shown in Fig. 4A, just after this procedure starts, no word data is stored in the count data memory 47. The search pointer KP is equal to the store pointer SP. In addition, since the store pointer SP is not equal to the end address $A_E$, as shown in Fig. 4B, the store pointer SP is incremented by nine bytes and thereby it indicates the address $A_1$. For example, as word data being read, "search" is stored in the address $A_0$ indicated by the search pointer KP. When the determined condition is NO in step S72, the procedure is advanced to step S76. Then, the search pointer KP is incremented and the procedure is advanced to S71.

In step S57, the first character of the next word data is detected referring to the next punctuation data by increasing the text pointer TP one by one. When it is determined to be YES in step S57, the address of the first character of the next word data is stored in the test pointer TP in step S58. The procedure of steps S54 through S58 is repeated and the counting procedure for counting the numbers of respective words in the text data having been created in the text memory 41 is executed. When this procedure is completed, the determined condition becomes NO in step S57 and the procedure is advanced to step S7. As shown in Fig. 4C, when the counting procedure for the text data created in the text memory 41 is executed, plurality of counting data are stored in the count data memory 47.

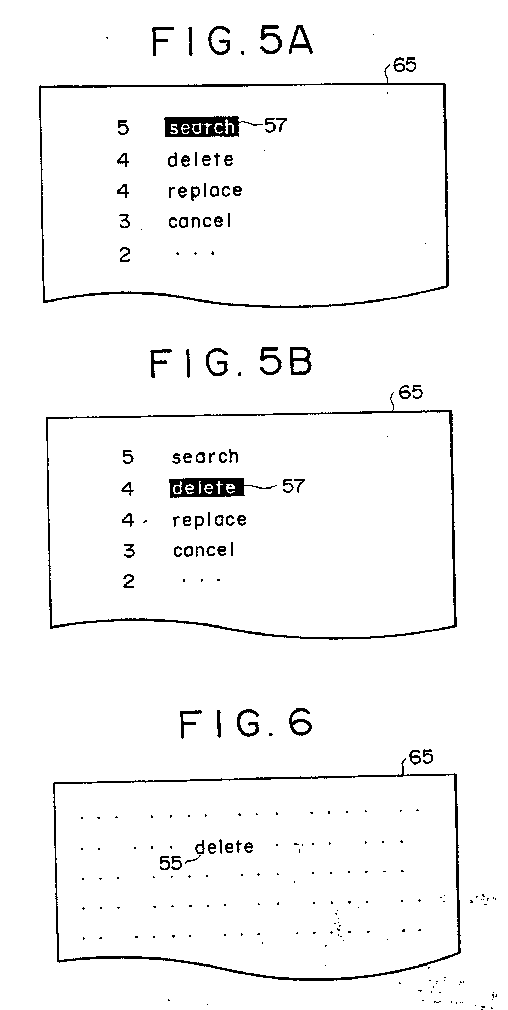

Then, the count procedure flag CPF is set in step S7 and thereby the display on the CRT display screen 65 is changed. As shown in Fig. 5A, respective words and the numbers of them appeared in the text are displayed on the CRT display 65 in step S8 in a particular order such as an order of frequency. After that, the count data display flag KDF is set in step S9 and the procedure is returned back to step S2. Fig. 5A shows the display on the CRT display screen 65 when no word data is stored in the designated word memory 51 in step S8; in this case, the words are listed in a particular order (such as alphabetical order or an order of the number of characters of the word) and the block cursor 57 is displayed on the top word of the list of the count data (the top word is highlighted by being displayed in reverse video).

When the cursor movement keys 13 are operated, the determined condition becomes YES in step S10 through step S3. When the count data display flag KDF is set in step S11, the block cursor 57 is displayed on the following line or the preceding line (in step S12). The desired word designated by the block cursor 57 is stored in the designated word memory 51 as the designated word in step S13 and the procedure is returned back to step S2. For example, as shown in Fig. 5B, when the cursor down key of cursor movement keys 13 is operated once, the block cursor 57 is moved onto the word "delete" and the word data "delete" is stored in the designated word memory 51.

Then, when the return key 12 is operated, the determined condition becomes YES in step 514 through steps S3 and S10. When the count data display flag KDF is set in step 515, the word searching procedure for searching the text data for the designated word data in the designated word memory 51 is executed in step S16. This word search procedure is substantially similar to the conventional searching function, for example, the searching function disclosed in Japanese Patent Provisional Publication No. SHO 63-167960.

The word search procedure will be described in the following. The word data, the first character code of which is the same as the character of the first character of the designated word, is searched in the text data on and after the address corresponding to the cursor-display position. When the character code of the first character of the designated word is the same character code of the word data of the text data, the character codes of each word is successively compared one by one. The entire word or the part of it having the same spelling is searched. Likewise, words which have the same first character as the designated word are successively searched and compared with the designated word.

When the word data which is equal to the designated word data is detected from the text data in step S16, the count data display flag KDF is reset in step S17. At that time, the display on the CRT display screen 65 is changed. In addition, as shown in Fig. 6, a portion of the text data including the designated word is displayed on the CRT display screen 65 in step S18 and the procedure is returned back to step S2. For example, when the designated word is "delete", the text data including "delete" is displayed. At that time, the cursor 55 is placed at the first character "d" of the word. Consequently, the operator can easily replace the frequently-used word "delete" with a synonym.

To display the next portion of the text data including the word "delete", by operating the word count key 14, the count data is displayed on the CRT display screen 65 through steps S3 through S5, S8 and S9. At that time, the block cursor 57 is displayed at the designated word like the previous operation. Thus, by depressing the return key 12 again, the procedure goes to steps S14 through S18, and the next portion of the text data including the word "delete" is displayed on the CRT display screen 65.

On the other hand, when the count data display flag KDF is set and the count data is listed on the CRT display screen 65, if the cancel key 15 is operated, it is determined YES in step S19 through steps S3, S10, and S14. Thus, the count data display flag KDF is reset in step S20; the editing screen, or the screen before the word count key 14 is depressed, is displayed on the CRT display screen 65 in step S21 and the procedure is returned back to step S2.

On the other hand, when the count data display flag KDF is set and the word count key 14 is operated again, it is determined YES in steps S3 and S4. Then, the counting procedure is executed again through S6 to S9 and newly created count data is displayed on the CRT display screen 65.

It is possible to cause the control operations on and after step S15 to be executed when a search key 16 is depressed, and after that, whenever the search key 16 is depressed, the text data including the designated word data stored in the designated word memory 51 can be searched. In step S8, it is possible to display the count data in the alphabetic order of the word.

Moreover, it is possible to increase the number of bytes of the area for storing word data in the count data memory 47 up to 30 bytes, for example, so as to store word data consisting of as many as 30 characters.

Furthermore, as disclosed in Japanese Patent Provisional Publication No. SHO 63-167960, it is possible to replace words being searched with another.

As described above, a plurality of words being inputted and their input times are displayed as a list. From the list, only by designating a desired word, the portion of the text data including the designated word is displayed on the CRT display screen 65. Thus, the designated word can easily be replaced with a synonym. The edit operation for preventing the frequent use of the same words can be simplified and thereby the operation efficiency can be remarkably improved.

The present invention can be applied to various text processing apparatuses as well as word processors.

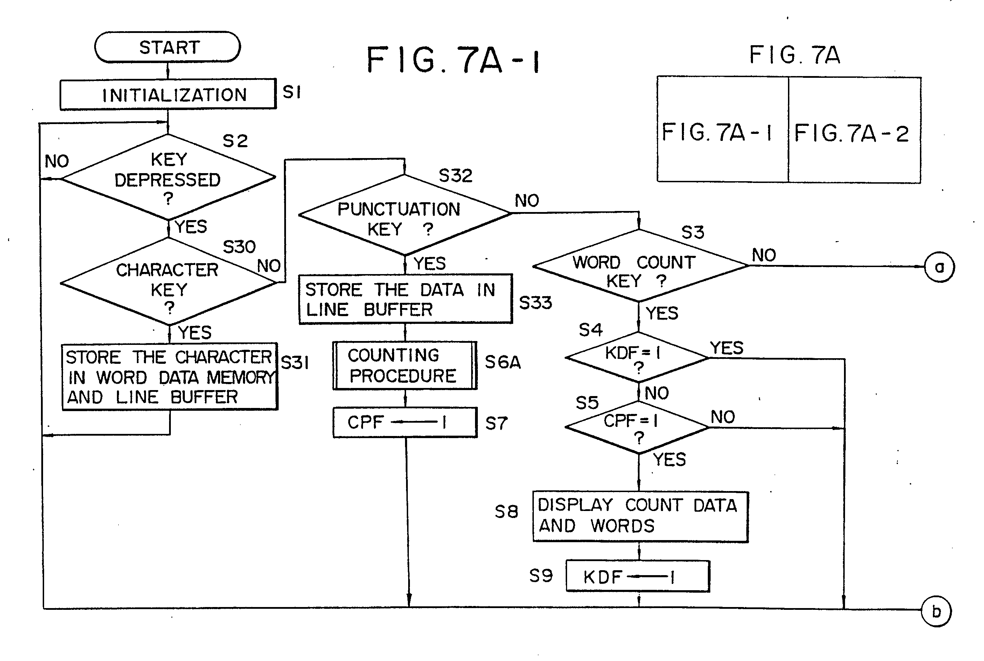

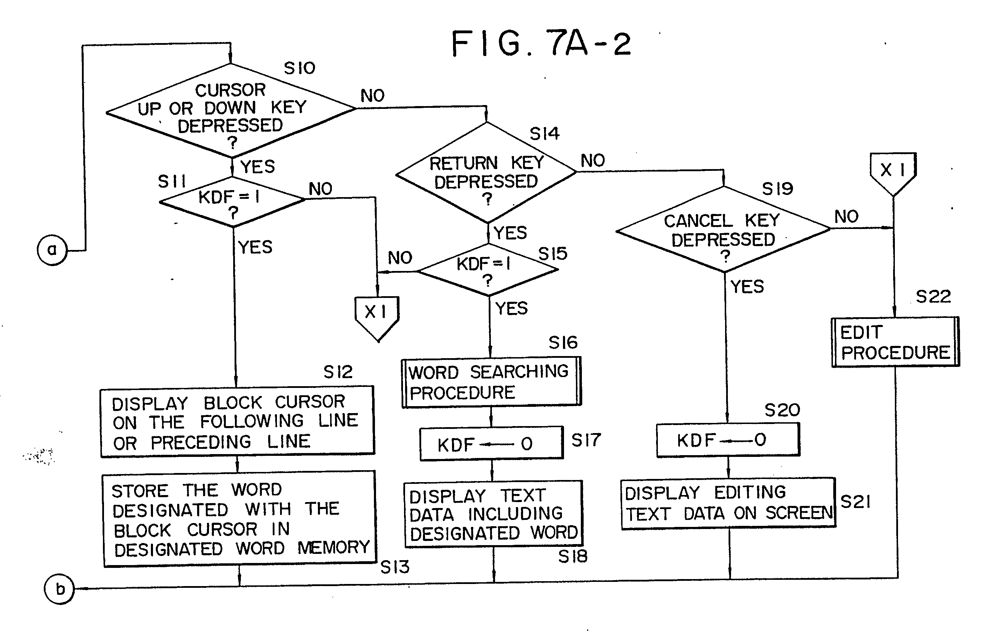

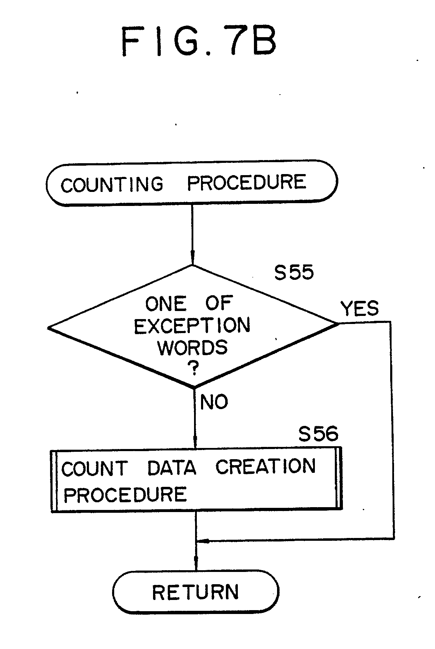

By partially changing the routine for controlling the display of the word input times in the above embodiment as shown in Figs. 7A and 7B, a word count mode for counting the numbers of respective words being input through the keyboard 3 can be formed.

In other words, in this modification, a word data memory for storing word data being inputted is provided in the RAM 40. Figs. 7A-1. 7A-2 are similar to Figs. 3A-1, 3A-2 except for steps S30 through S33 inserted between steps S2 and S3. The counting procedure for counting the numbers of respective words being inputted is executed in step S6A. The other section other than the modified section is the same as that of the embodiment described above.

When the character keys 10 are depressed, it is determined YES in steps S2 and S30. Thus, the character code is stored in both the word data memory provided in the RAM 40 and the line buffer 42 (in step S31) and then the procedure is returned back to step S2. When a punctuation key such as the space key 11 is depressed, the determined condition becomes YES in step S32 through steps S2 and S30. The punctuation code is stored in the line buffer 42 (in step S33). Then, the procedure is advanced to S6A. In this step S6A, the counting procedure for counting the numbers of respective words being inputted is executed (see Fig. 7B).

When the counting procedure is started, the procedure of steps S55 and S56 is executed, wherein the count data creation procedure in step S56 is the same as that in the embodiment described above. In step S71, it is examined whether or not the word data being inputted is the same as that indicated by the search pointer KP. In step S75, the word data being inputted and the initial count of the word "1" are stored in the address indicated by the search pointer KP.

When the counting procedure for counting the respective one of the words being inputted is completed, the procedure on and after step S7 is executed. Thus, the count data of the word being inputted and the count of the word are successively created in the count data memory 47.

To display the count data on the CRT display screen 65, the word count key 14 is depressed in the same manner as the aforesaid embodiment.

As described above, whenever the word is inputted, the word and the count of the word are successively stored as the count data which can be displayed as a list. Further, by designating a desired word on the list, the appropriate portion of the text data including the designated word is displayed on the CRT display screen 65. Thus, the designated word can easily be replaced with a synonym. The edit operation for preventing the frequent use of the same words can be simplified and the operation performance can be remarkably improved.

## Claims

1. A text processing device comprising input means for inputting text, text storing means for storing therein the text having been inputted through said input means, and display means for displaying said text, said device further comprising: counting means for counting the incidence of respective words in the text stored in said text storing means; first control means for displaying the respective words and the numbers thereof counted by said counting means; designate means for designating one of said words displayed by said display means; detection means for detecting a portion of the text including said designated word; and second control means for displaying said portion of the text on said display means.

2. The text processing device according to claim 1, wherein said counting means further comprises position designate means for designating a desired position in the text, and wherein said counting means counts the numbers of the respective words appeared in the text after the position designated by said position designate means.

3. A text processing device comprising input means for inputting text, text storing means for storing the text inputted through said input means, and display means for displaying said text, said text processing device further comprising: counting means for counting the incidence of respective words inputted through said input means; first control means for displaying the respective words and the numbers thereof counted by said counting means; designate means for designating one of said words displayed by said display means; detection means for detecting a portion of the text including said designated word, said text being inputted through said input means and stored in said text storing means; and second control means for displaying said portions of the text on said display means.

4. The text processing device according to claim 3, wherein said counting means counts the numbers of the words each time when respective words are inputted through said input means.

5. A text processing device capable of being operated in one of a plurality of operation modes including a word count mode for counting the numbers of respective words in a text, a word searching mode For searching for a certain word in the text, and an edit mode for editing said text, said device comprising input means for inputting the text, text storing means for storing therein the text inputted through said input means, display means for displaying said text, said device further comprises: select means for selecting one of said plurality of operation modes; counting means for counting the numbers of respective one of the words used in the text stored in said text storing means when said word count mode is selected; memory means for storing the respective words and the number thereof counted by said counting means; first control means for displaying the respective words and the numbers thereof, which are stored in said memory means, on display means when said word count mode is selected; designate means for designating one of said words displayed on said display means; detection means for detecting a portion of the text including said designated word when said word searching mode is selected; and second control means for displaying said portions of the text on said display means when said word searching mode having been selected.

6. The text processing device according to claim 5, which is capable of displaying the portion of the text having been displayed in the preceding edit mode on said display means when said edit mode is selected after said device having been operated in the modes other than said edit mode.

7. The text processing device according to any preceding claim wherein said counting means comprises exception word storing means for storing therein at least one word which need not be counted, and wherein said counting means counts the numbers of the respective words except the word stored in said exception word storing means.

8. The text processing device according to any preceding claim which further comprises memory means for storing the respective words with the numbers thereof counted by said counting means, and wherein said first control means displays the respective words and the numbers thereof stored in said memory means.

9. The text processing device according to claim 8, wherein said memory means is capable of storing a predetermined number of characters of the respective words.

10. The text processing device according to any preceding claim wherein said designate means displays a block cursor on one of said words on said display means, and wherein said device further comprises cursor movement means for moving said block cursor among the words displayed on said display means.

11. The text processing device according to any preceding claim wherein said designate means comprises designated word storing means for storing the designated word, and wherein said detecting means detects said designated word in said text by comparing characters of respective words included in said text with the characters of the word stored in said designated word storing means.

12. The text processing device according to any preceding claim wherein said first control means displays a table of the words and the numbers thereof counted by said counting means, said words and the numbers thereof being arranged in a predetermined order in said table.

# F I G . I

FIG. 2

EP 0 402 064 A2

# FIG.3A-1

EP 0 402 064 A2

# FIG. 3A-2

## FIG. 3A

| FIG. 3A-1 | FIG. 3A-2 |
|-----------|-----------|

(a)

**S14** RETURN KEY DEPRESSED ? —NO→

YES↓

(b) ←NO— **S15** KDF=1 ?

YES↓

**S16** WORD SEARCHING PROCEDURE

**S17** KDF←0

**S18** DISPLAY TEXT DATA INCLUDING DESIGNATED WORD

**S19** CANCEL KEY DEPRESSED ? —NO→

YES↓

**S20** KDF←0

**S21** DISPLAY EDITING TEXT DATA ON SCREEN

X1

**S22** EDIT PROCEDURE

(c)

EP 0 402 064 A2

FIG. 3B

COUNTING PROCEDURE

S50
STORE THE ADDRESS OF
TEXT MEMORY CORRESPONDING
TO CURSOR POSITION
IN TEXT POINTER MEMORY

S51
CLEAR COUNT DATA

S52
IS
TEXT POINTER
INDICATE THE FIRST
LETTER OF A
WORD
?

YES

NO

TP ← TP - 1    S53

S54
READ OUT WORD DATA
INDICATED BY TEXT
POINTER

S55
IS THE WORD
ONE OF EXCEPTION
WORDS
?

YES

NO

COUNT DATA CREATION
PROCEDURE    S56

S57
IS THERE
NEXT WORD
?

YES

NO

S58
STORE THE ADDRESS OF
THE FIRST LETTER OF
THE FOLLOWING WORD
IN TEXT POINTER

RETERN

EP 0 402 064 A2

# FIG. 3C

**COUNT DATA CREATION PROCEDURE**

S70 — KP ◄—— Ao

S71 — READ OUT WORD DATA IS THE SAME DATA INDICATED BY THE SEARCH POINTER ?

NO → S72 — KP = SP ?

S72 NO → S76 — INCREMENT KP

S72 YES → S73 — SP = Ae ?

S73 YES →

S73 NO → S74 — INCREMENT SP

S74 → S75 — STORE THE READ OUT WORD DATA AND COUNT "I AT THE ADDRESS INDICATED BY SEARCH POINTER

S71 YES → S77 — INCREMENT THE COUNT OF THE WORD DATA INDICATED BY THE SEARCH POINTER

RETERN

EP 0 402 064 A2

# FIG. 4A

| WORD DATA (8 BYTES) | COUNT (I BYTE) | |
|---|---|---|
| | | 47 |

A0 → KP SP
A1
A2
A3
A4
A5
A6
A7
AE

# FIG. 4C

| | search | I |
|---|---|---|
| A0 | search | I |
| A1 | cancel | I |
| A2 | write | I |
| A3 | replace | I |
| A4 | | |
| A5 | | |
| A6 | | |
| A7 | | |
| AE | | |

47

# FIG. 4B

| search | I | |
|---|---|---|
| | | 47 |

A0 → KP
A1 → SP
A2
A3
A4
A5
A6
A7
AE

# FIG. 5A

65

| 5 | search | ~57 |
| 4 | delete | |
| 4 | replace | |
| 3 | cancel | |
| 2 | . . . | |

# FIG. 5B

65

| 5 | search | |
| 4 | delete | ~57 |
| 4 | replace | |
| 3 | cancel | |
| 2 | . . . | |

# FIG. 6

65

55~ delete

FIG. 7A-1

FIG. 7A

| FIG. 7A-1 | FIG. 7A-2 |

START

INITIALIZATION — S1

S2 — KEY DEPRESSED ?
NO / YES

S30 — CHARACTER KEY ? — NO / YES

S31 — STORE THE CHARACTER IN WORD DATA MEMORY AND LINE BUFFER

S32 — PUNCTUATION KEY ? — NO / YES

S33 — STORE THE DATA IN LINE BUFFER

S6A — COUNTING PROCEDURE

S7 — CPF ⟵ 1

S3 — WORD COUNT KEY ? — NO → (a) / YES

S4 — KDF = 1 ? — YES / NO

S5 — CPF = 1 ? — NO / YES

S8 — DISPLAY COUNT DATA AND WORDS

S9 — KDF ⟵ 1

(b)

EP 0 402 064 A2

FIG. 7A-2

X1

S10 — CURSOR UP OR DOWN KEY DEPRESSED? — NO / YES
S11 — KDF=1? — NO / YES
S12 — DISPLAY BLOCK CURSOR ON THE FOLLOWING LINE OR PRECEDING LINE
S13 — STORE THE WORD DESIGNATED WITH THE BLOCK CURSOR IN DESIGNATED WORD MEMORY

S14 — RETURN KEY DEPRESSED? — NO / YES
S15 — KDF=1? — NO / YES
S16 — WORD SEARCHING PROCEDURE
S17 — KDF←0
S18 — DISPLAY TEXT DATA INCLUDING DESIGNATED WORD

S19 — CANCEL KEY DEPRESSED? — NO / YES
S20 — KDF←0
S21 — DISPLAY EDITING TEXT DATA ON SCREEN
S22 — EDIT PROCEDURE

X1
a
b

# F I G. 7B

```
      ( COUNTING   PROCEDURE )
                  |
                  |                    S55
                 / \
                /   \
               /ONE OF\           YES
              /EXCEPTION\ ─────────────────┐
               \ WORDS /                   |
                \  ?  /                    |
                 \   /                     |
                  \ /                      |
                 NO|                       |
                   |              S56      |
        ┌──────────────────────────┐      |
        ‖ COUNT  DATA  CREATION     ‖      |
        ‖ PROCEDURE                 ‖      |
        └──────────────────────────┘      |
                   |                       |
                   |←──────────────────────┘
                   |
            (  RETURN  )
```